Europäisches Patentamt

European Patent Office

Office européen des brevets

(19)

(11) Veröffentlichungsnummer: **0 501 518 A1**

## EUROPÄISCHE PATENTANMELDUNG

(12)

(21) Anmeldenummer: **92103507.7**

(22) Anmeldetag: **29.02.92**

(51) Int. Cl.5: **B26B 29/02**, B26B 23/00, A47J 47/00

Priorität 01.03.91 ITU PN91000013.

(30) Priorität: **01.03.91**

(43) Veröffentlichungstag der Anmeldung:
**02.09.92 Patentblatt 92/36**

(84) Benannte Vertragsstaaten:
**AT CH DE GB LI SE**

(71) Anmelder: **OFFICINE DI ERNESTO BELTRAME S.p.A.**
**Viale dell'Industria 3**
**I-33085 Maniago, Pordenone(IT)**

(72) Erfinder: **Beltrame, Giorgio**
**Via Revedole 3b**
**I-33170 Pordenone(IT)**

(74) Vertreter: **Gustorf, Gerhard, Dipl.-Ing.**
**Patentanwalt Dipl.-Ing. Gerhard Gustorf**
**Bachstrasse 6 A**
**W-8300 Landshut(DE)**

(54) **Vorrichtung zum Zerkleinern von Kräutern, Gemüse u. dgl.**

(57) Die Vorrichtung zum Zerkleinern von Kräutern, Gemüse u. dgl. besteht aus einer Arbeitsplatte (7;23) und einem Wiegemesser (1;17). Mittels eines Griffes (2;18) kann die Klinge (3;19) des Wiegemessers in einer Mulde (13;27) der Arbeitsplatte bewegt werden. Wenn die Vorrichtung nicht gebraucht wird, ist das Wiegemesser (1;17) über Befestigungsmittel sicher an der Arbeitsplatte (7;23) gehalten.

Die Befestigungsmittel können aus einem in die Arbeitsplatte (7) eingearbeiteten Schlitz (4) bestehen, in den die Klinge (3) des Wiegemessers (1) eingesteckt wird. Eine andere Möglichkeit besteht darin, an der Arbeitsplatte (23) einen drehbaren Feststellriegel (22) anzubringen, der durch ein durch das Wiegemesser (17) eingearbeitetes Fenster (21) greift.

Fig. 6

EP 0 501 518 A1

Die Erfindung betrifft eine Vorrichtung zum Zerkleinern von Kräutern, Gemüse u. dgl. mit einem auf einer Arbeitsplatte manuell schwingend zu bewegenden Wiegemesser, das aus einer Klinge und einem Griff besteht.

Zum Zerkleinern von Kräutern, Gewürzen u. dgl. ist es in der Küchentechnik bekannt, Wiegemesser zu verwenden, deren Klinge eine bogenförmige Schneide und an den beiden Enden je einen Handgriff hat. Durch schwingende Bewegungen des Wiegemessers werden die auf der Arbeitsplatte angeordneten Kräuter wie Schnittlauch, Petersilie o. dgl. zerkleinert. Auf diese Weise wird der Einsatz von Messern mit im wesentlichen geradliniger Klinge mit all den damit verbundenen Nachteilen vermieden. In letzter Zeit wurde das mit zwei Handgriffen versehene Wiegemesser durch ein vereinfachtes und leichter handhabbares Wiegemesser ersetzt, das ebenfalls eine bogenförmige Klinge aufweist, die jedoch kleinere Abmessungen und nur einen Handgriff hat, so daß die Bedienung mit einer Hand möglich ist. Darüber hinaus sind Wiegemesser bekannt, bei denen die Klinge nicht fest ist, sondern an einem Griff schwenkbar angebracht, so daß die schwingende Bewegung der Klinge um den Drehpunkt am Griff erfolgt und nicht den Handbewegungen starr folgt. Alle genannten Wiegemesser werden einzeln und unabhängig von der Arbeitsplatte hergestellt und vertrieben, wobei keine Maßnahmen zur sicheren Aufbewahrung der Gerätschaften nach dem Gebrauch vorgesehen sind.

Daneben sind Wiegemesser bekannt, deren Handgriff fest mit der Klinge verbunden ist und nur von einer Hand betätigt wird; die zugehörige Arbeitsplatte hat in ihrem mittleren Bereich eine muldenförmige, im allgemeinen kreisförmige Einsenkung zur Aufnahme des zu zerkleinernden Materials. Der Querschnitt oder das Profil des konkaven Mittelbereichs erlaubt jedoch nicht den Einsatz des Wiegemessers auf der gesamten, eingesenkten Fläche. Daneben erlaubt die bekannte Vorrichtung nicht die gemeinsame Aufbewahrung von Arbeitsplatte und Wiegemesser nach dem Gebrauch, so daß die beiden getrennt voneinander aufbewahrten Teile verlorengehen können und die Gefahr besteht, daß sich die Hausfrau beim Suchen des Wiegemessers an der Schneide der Klinge verletzt.

Der Erfindung liegt die Aufgabe zugrunde, eine Vorrichtung der eingangs umrissenen Gattung zur Verfügung zu stellen, die so aufgebaut ist, daß die Arbeitsplatte und das Wiegemesser nach dem Gebrauch als feste Einheit aufbewahrt oder aufgehängt werden können, wobei die Schneide der Klinge des Wiegemessers geschützt untergebracht ist.

Gemäß der Erfindung wird diese Aufgabe dadurch gelöst, daß die Arbeitsplatte Befestigungsmittel zur sicheren Halterung des Wiegemessers an der Arbeitsplatte aufweist.

Die Befestigungsmittel können dabei aus einem in die Arbeitsplatte eingearbeiteten Schlitz zum Einstecken der Klinge des Wiegemessers bestehen, welches dann reibschlüssig in dem Schlitz gesichert ist.

Gemäß einer Variante der Erfindung bestehen die Befestigungsmittel aus einem an der Arbeitsplatte angebrachten Feststellriegel, der durch ein durch das Wiegemesser eingearbeitetes Fenster greift. Auch in diesem Fall bilden die beiden Teile der Vorrichtung in der Nicht-Gebrauchsstellung eine Einheit, die als Ganzes aufbewahrt werden kann. Von der Arbeitsplatte kann ein bogenförmiger Rand abstehen, an dem die Schneide der Klinge bei festgehaltenem Wiegemesser anliegt, so daß die Gefahr von Verletzungen vermieden wird.

Weitere Merkmale und Vorteile der Erfindung ergeben sich aus den Patentansprüchen und aus der folgenden Beschreibung von zwei Ausführungsbeispielen, die in der Zeichnung dargestellt sind. Es zeigen:

Figur 1 die Ansicht einer Vorrichtung gemäß der Erfindung mit zum Gebrauch bereitgelegtem Wiegemesser,

Figur 2 eine Draufsicht der Vorrichtung mit eingestecktem Wiegemesser,

Figur 3 eine Unteransicht der Arbeitsplatte der Figur 2 ohne Wiegemesser,

Figur 4 eine Stirnansicht der Arbeitsplatte in Richtung der Pfeile A - A der Figur 3,

Figur 5 eine der Figur 1 entsprechende Darstellung einer Variante der Vorrichtung,

Figur 6 eine Draufsicht der Vorrichtung gemäß Figur 5 mit festgehaltenem Wiegemesser und

Figur 7 die Ansicht eines Hakens zum Aufhängen der Vorrichtung der Figuren 1 bis 4 bzw. 5 und 6.

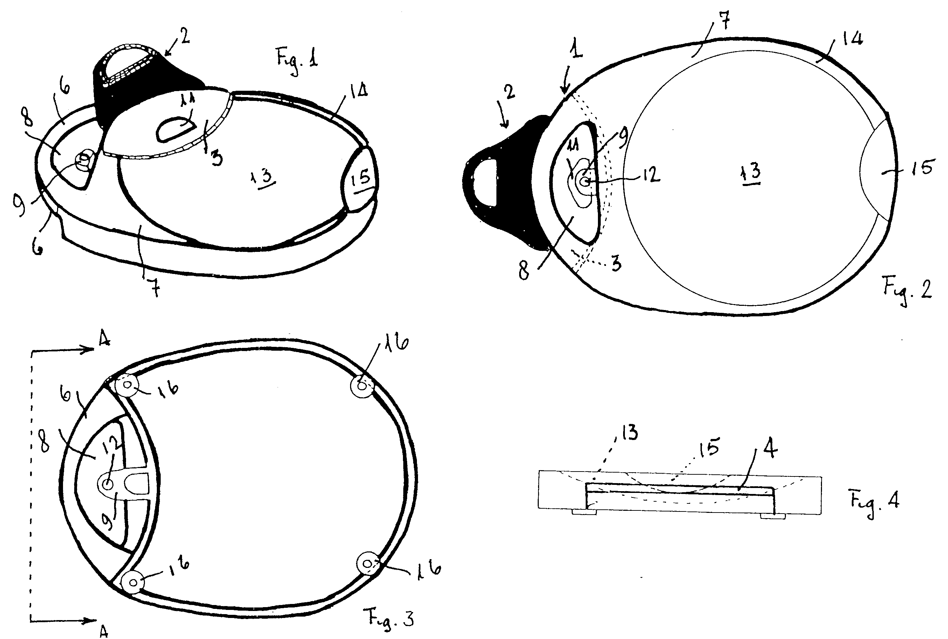

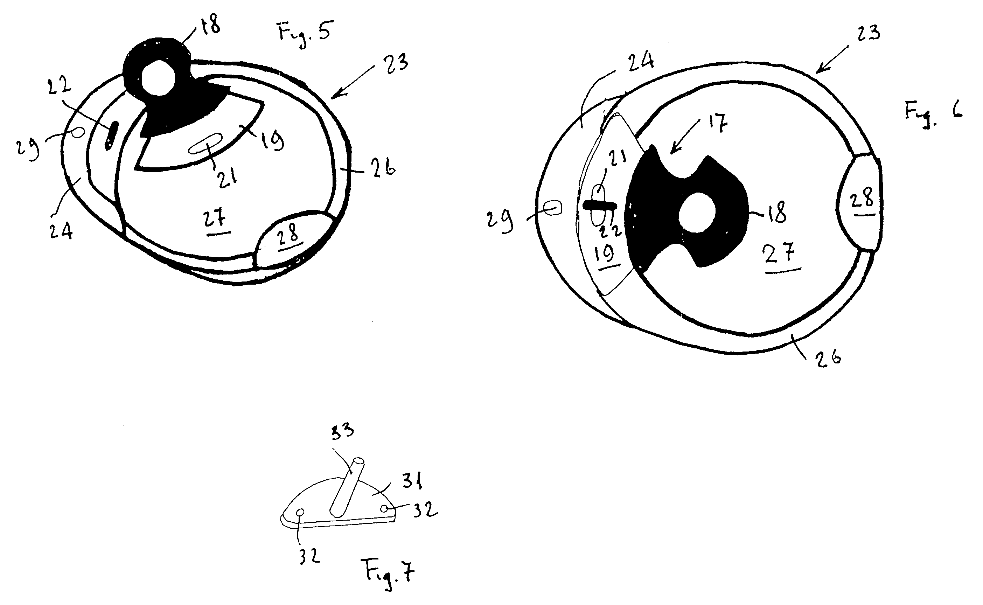

Wie die Figuren 1 bis 4 zeigen, besteht die Vorrichtung gemäß der Erfindung einerseits aus einem Wiegemesser 1 und andererseits aus einer Arbeitsplatte 7. Am Wiegemesser 1 ist ein Griff 2 fest angebracht, der beispielsweise aus Kunststoff hoher Dichte bestehen kann. Das Wiegemesser 1 hat eine Klinge 3 mit bogenförmiger Schneide. Wenn die Vorrichtung nicht gebraucht wird, ist das Wiegemesser 1 mit seiner Klinge 3 in einen Schlitz 4 eingesteckt, der waagrecht in die Arbeitsplatte 7 eingearbeitet ist. Der Schitz 4 ist an beiden Seiten seines Eingangs von einer Wange oder Lippe 6 begrenzt. Die beiden Lippen 6 sind einstückig mit der Arbeitsplatte 7 ausgebildet und halten die eingesteckte Klinge 3 reibschlüssig fest. Die Arbeitsplatte 7 kann ebenfalls aus einem Kunststoff hoher Dichte hergestellt sein, beispielsweise Polyethylen.

Im Bereich der Wangen oder Lippen 6 hat die Arbeitsplatte 7 eine etwa halbkreisförmige Aussparung 8, in welche ein Vorsprung 9 hineinragt, der einstückig mit der Arbeitsplatte 7 ausgebildet ist. Die Klinge 3 hat ein ebenfalls etwa halbkreisförmiges Fenster 11, das so angeordnet ist, daß das Ende des Vorsprungs 9 mit einer darin eingearbeiteten Bohrung 12 in dieses Fenster 11 hineinragt, wenn die Klinge 3 in den Schlitz 4 eingesteckt ist. Der Vorsprung 9 dient zur Aufhängen der gesamten Vorrichtung, wenn diese nicht gebraucht wird.

Wie Figur 2 zeigt, hat die Arbeitsplatte 7 eine etwa elliptische Form und weist an ihrer Oberseite eine Mulde 13 auf, die von einem nach oben abstehenden Rand 14 begrenzt ist. Die Mulde 13 dient zur Aufnahme des zu zerkleinernden Materials wie frische oder getrocknete Kräuter und Gewürze, Zwiebeln, Knoblauch, Speck, Nüsse o. dgl. Das Querschnittsprofil der Mulde 13 ist so gewählt, daß an jedem Punkt der Krümmungsradius größer als der Krümmungsradius der Schneide der Klinge 3 ist, so daß diese auch in der Nähe des Randes 14 schneidend auf das Material einwirken kann.

Auf der dem Schlitz 4 gegenüberliegenden Seite ist der Rand 14 der Arbeitsplatte 7 von einer Einsenkung 15 unterbrochen, über welche mittels der Klinge 3 des Wiegemessers 1 das zerkleinerte Material aus der Mulde 13 ausgeschoben werden kann.

An ihrer Unterseite hat die Arbeitsplatte 7 vier Sackbohrungen, die als Sitze für elastische Füße 16 dienen, so daß die Arbeitsplatte 7 rutschfest auf einem Küchentisch o. dgl. ruht.

Die Wangen oder Lippen 6 üben auf die Klinge 3 des Wiegemessers 1 beim Einschieben in den Schlitz 4 eine gewisse Kraft aus, die den sicheren Sitz des Wiegemessers 1 im Schlitz 4 der Arbeitsplatte 7 gewährleistet, wenn die Vorrichtung nicht gebraucht wird.

Bei der Ausführungsform der Figuren 5 und 6 hat das Wiegemesser 17 ebenfalls eine Klinge 19 mit bogenförmiger Schneide sowie einen Griff 18. In die Klinge 19 ist ein Fenster 21 in Form eines Langloches eingearbeitet. In der Aufbewahrungsstellung der Vorrichtung gemäß Figur 6 greift durch das Fenster 21 ein Feststellriegel 22, der drehbar am Rand der Arbeitsplatte 23 angebracht ist. Die Arbeitsplatte 23 hat auf der der Einsenkung 28 gegenüberliegenden Seite einen nach oben abstehenden Rand 24, an welchem die Schneide der Klinge 19 anliegt, so daß sie geschützt ist und keine Verletzungsgefahr darstellt, wenn die Vorrichtung in der Stellung der Figur 6 nicht gebraucht wird.

Mit Ausnahme des erwähnten Randes 24 ist die Arbeitsplatte 23 etwa kreisförmig ausgebildet, wobei die Mulde 27 zur Aufnahme des zu schneidenden Material von einem nach oben vorstehenden Rand 26 begrenzt ist. Dieser Rand 26 ist nur durch die bereits erwähnte Einsenkung 28 unterbrochen, über welche das zerkleinerte Material in eine Schüssel o. dgl. abgegeben werden kann. Der Krümmungsradius der konkaven Mulde 27 ist auch in diesem Ausführungsbeispiel so gewählt, daß er an jedem Punkt größer als der Krümmungsradius der Schneide der Klinge 19 ist, so daß diese auch in der Nähe des nach oben vorstehenden Randes 24 schneidend auf das Material einwirkt.

Der Rand 24 hat im mittleren Bereich ein Loch 29, über welches die gemäß Figur 6 zusammengesetzte Vorrichtung aufgehängt werden kann. Hierzu dient beispielsweise der in Figur 7 gezeigte Haken 31 aus Kunststoff, welcher über zwei Bohrungen 32 mittels Schrauben oder Dübeln an einer Mauer oder der Wand eines Küchenmöbels befestigt werden kann. Der von dem Haken 31 abstehende Vorsprung 33 greift in das Loch 29 (Figur 6) oder in die Bohrung 12 (Figur 2) der Vorrichtung ein, wodurch diese sicher aufgehängt ist.

Im zusammengesteckten Zustand der Vorrichtung, der in den Figuren 2 bzw. 6 gezeigt ist und die Nicht-Gebrauchsstellung darstellt, ist diese über die Bohrung 12 bzw. über das Loch 29 an dem Haken 31 aufgehängt. Wenn die Vorrichtung benötigt wird, um Küchenkräuter o. dgl. zu zerkleinern, wird sie von dem Haken 31 abgenommen, wobei zu keiner Zeit eine Verletzungsgefahr besteht, da die Klinge 3 bzw. 19 abgedeckt ist. Der Vorteil einer zusammengehörenden Einheit aus Arbeitsplatte und Wiegemesser besteht zudem darin, daß nicht zwei Teile getrennt voneinander aufbewahrt werden müssen, sondern daß sie zusammen verstaut werden. Wenn das Wiegemesser 1 bzw. 17 von der Arbeitsplatte 7 bzw. 23 abgenommen ist, kann das in der Mulde 13 bzw. 27 liegende Material zerkleinert und anschließend mit Hilfe der Klinge 3 bzw. 19 über die Einsenkung 15 bzw. 28 ausgeschoben werden. Um beim Ausführungsbeispiel der Figuren 1 bis 4 das Wiegemesser 1 benutzen zu können, genügt es, dieses an seinem Griff 2 aus dem Schlitz 4 herauszuziehen, wobei eine geringe Reibungskraft der beiden Wangen oder Lippen 6 überwunden werden muß. Im Ausführungsbeispiel der Figur 5 und 6 muß lediglich der Feststellriegel 22 um etwa 90° gedreht werden, so daß er in Richtung des längsschlitzförmigen Fensters 21 liegt und anschließend das Wiegemesser 17 abgenommen werden kann.

Wenn der Zerkleinerungsvorgang abgeschlossen ist, werden beide Teile der Vorrichtung gereinigt, worauf das Wiegemesser 1 in den Schlitz 4 zurückgesteckt wird und die Vorrichtung an dem Haken 31 aufgehängt werden kann. Im Ausführungsbeispiel der Figuren 5 und 6 wird die Klinge 19 des Wiegemessers 17 gemäß Figur 6 mit ihrer Schneide gegen den nach oben vorstehenden Rand 24 bewegt, wobei das Fenster 21 über den Feststellriegel 22 geschoben wird. Anschließend wird der Feststellriegel 22 um 90° verdreht, so daß das Wiegemesser 17 in seiner Nicht-Gebrauchsstellung gesichert ist.

**Patentansprüche**

1. Vorrichtung zum Zerkleinern von Kräutern, Gemüse u. dgl. mit einem auf einer Arbeitsplatte manuell schwingend zu bewegenden Wiegemesser, das aus einer Klinge und aus einem Griff besteht, dadurch gekennzeichnet, daß die Arbeitsplatte (7;23) Befestigungsmittel (4;22) zur sicheren Halterung des Wiegemessers (1;17) an der Arbeitsplatte (7;23) aufweist.

2. Vorrichtung nach Anspruch 1, dadurch gekennzeichnet, daß die Befestigungsmittel aus einem in die Arbeitsplatte (7) eingearbeiteten Schlitz (4) zum Einstecken der Klinge (3) des Wiegemessers (1) bestehen.

3. Vorrichtung nach Anspruch 2, dadurch gekennzeichnet, daß der Eingang des Schlitzes (4) von die eingesteckte Klinge (3) reibschlüssig haltenden Lippen (6) begrenzt ist.

4. Vorrichtung nach Anspruch 1, dadurch gekennzeichnet, daß die Befestigungsmittel aus einem an der Arbeitsplatte (23) angebrachten Feststellriegel (22) bestehen, der durch ein in das Wiegemesser (17) eingearbeitetes Fenster (21) greift.

5. Vorrichtung nach Anspruch 4, dadurch gekennzeichnet, daß das Fenster (21) aus einem in die Klinge (19) eingearbeiteten Langloch besteht und daß der Feststellriegel (22) drehbar ist.

6. Vorrichtung nach Anspruch 4 oder 5, dadurch gekennzeichnet, daß von der Arbeitsplatte (23) ein bogenförmiger Rand (24) absteht, an dem die Schneide der Klinge (19) bei festgehaltenem Wiegemesser (17) anliegt.

7. Vorrichtung nach einem der vorhergehenden Ansprüche, dadurch gekennzeichnet, daß in die Arbeitsplatte (7;23) eine Mulde (13;27) eingearbeitet ist, deren Krümmungsradius größer als der der Klinge (3;19) des Wiegemesser (1;17) ist.

8. Vorrichtung nach Anspruch 7, dadurch gekennzeichnet, daß die Mulde (13; 27) von einem nach oben vorstehenden Rand (14;26) begrenzt ist.

9. Vorrichtung nach Anspruch 8, dadurch gekennzeichnet, daß der Rand (14;26) an einer Stelle von einer Einsenkung (15,28) unterbrochen ist.

10. Vorrichtung nach einem der vorhergehenden Ansprüche, dadurch gekennzeichnet, daß die Arbeitsplatte (7;23) eine Öffnung (12;29) zum Aufhängen der Vorrichtung aufweist.

Fig. 1

Fig. 2

Fig. 3

Fig. 4

EP 0 501 518 A1

Fig. 6

Fig. 5

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | BE-A-374 698 (P. DEFRAIGNE)<br><br>* Seite 2 - Seite 3; Abbildungen 1-3 *<br>--- | 1-3,7,8, 10 | B26B29/02<br>B26B23/00<br>A47J47/00 |
| Y | GB-A-613 361 (BRAMHALL & CO. LTD.)<br><br>* Seite 2, Zeile 37 - Zeile 72; Abbildungen *<br>--- | 1-3,7,8, 10 | |
| A | US-A-3 570 125 (J. HAHN & G. HEAD)<br>* Spalte 2, Zeile 28 - Zeile 65; Abbildungen *<br>--- | 4 | |
| A | US-A-2 796 902 (P. MERCURY)<br>* das ganze Dokument *<br><br>----- | 9 | |
| | | | RECHERCHIERTE SACHGEBIETE (Int. Cl.5 )<br><br>B26B<br>A47J |

Der vorliegende Recherchenbericht wurde für alle Patentansprüche erstellt

| Recherchenort | Abschlußdatum der Recherche | Prüfer |
|---|---|---|
| DEN HAAG | 11 JUNI 1992 | RAVEN P. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..........................................................................................
& : Mitglied der gleichen Patentfamilie, übereinstimmendes
    Dokument